# EUROPEAN PATENT APPLICATION

(11) **EP 2 434 257 A2**
(43) Date of publication of application: **28.03.2012**
(21) Application number: 11180914.1
(22) Date of filing: 12.09.2011
(51) Int. Cl.: G01C 21/36

(54) **Map image display device, map image display method, and computer program**

(30) Priority: 24.09.2010 JP 2010213381
(71) Applicant: AISIN AW CO., LTD., Anjo-shi, Aichi-ken 444-1192 (JP)
(72) Inventor: Oaki, Daisuke, Anjo-shi, Aichi-ken, 444-1192 (JP); Kubota, Shinichi, Anjo-shi, Aichi-ken, 444-1192 (JP); Kurauchi, Naoyuki, Anjo-shi, Aichi-ken, 444-1192 (JP)
(74) Representative: Intès, Didier Gérard André

(57) **Abstract**

Map image display device (1) wherein:
- a first display mode changing unit (43) displays at a prescribed timing an auxiliary image (67) in a specific area (66) of the map display area(65), and changes to a first display mode in which map data of a first target area (71) is read from the map data storage medium (12) and is displayed in the map display area excluding the specific area;
- an operation receiving unit (44) receives operations from a user.
Furthermore, when a prescribed operation is received, a second display mode changing unit (45):
- reads from a storage medium the map data of an adjacent area (68,69,72) next to the first target area, on which a second target area is based,
- removes the auxiliary image from display, and
- changes to a second display mode in which the map image of the second target area is displayed in the map display area including the specific area.

## Description

### BACKGROUND OF THE INVENTION

The present invention relates to a map image display device, a map image display method, and a computer program which display a map image of a prescribed area on a display device.

### Description of the Related Art

Conventional on-vehicle navigation devices, portable information devices such as personal digital assistants (PDAs) and mobile phones, personal computers and the like can display a map image of a desired area on a display device for a user by storing facility names and roads such as general roads and expressways as map data in various storage devices, or by downloading such map data from a server or the like.

The display device on which the map image is displayed may show at a prescribed timing a new image (referred to as an "auxiliary image" below) that is different from the map image, which reduces the display area of the map image. For example, if a user presses a button that calls up a menu screen, the menu screen is displayed on the display device as an auxiliary image. In particular, at times when a navigation device performs travel guidance along a guidance route, once the vehicle is located within a prescribed distance (e.g., within 300 meters) from an intersection for which travel guidance such as right or left turn guidance is performed (referred to as a "guided intersection" below), the navigation device displays on the display device an enlarged view of the guided intersection as an auxiliary image.

If such an auxiliary image is displayed, the display area of the map image is reduced in size compared to when the auxiliary image is not displayed, which makes it harder to see facility information and road shapes in the display area of the map image. In view of this problem, art has been proposed for expanding the display area of the map image to its original size after an auxiliary image displayed on the display device is deliberately removed by the user. For example, Japanese Patent Application Publication No. JP-A-2010-66227 (pages 12 and 13, FIG. 12) proposes art in which an "AV area" that includes operation buttons and information related to AV is displayed in part of the display area of a liquid crystal display, and if the user presses a "Navigation" button, the "AV area" is removed and a "Navigation area" (a map image around a position of the host vehicle) is displayed over the entire area of the liquid crystal display.

### SUMMARY OF THE INVENTION

According to the art described in JP-A-2010-66227, after the user presses the "Navigation" button and the "AV area" (i.e., auxiliary image) is removed, the same area range of map data is displayed on the liquid crystal display regardless of the data content of the map data to be displayed. Specifically, the area of map data to be displayed is uniformly determined based on a current position of the host vehicle, display type (nose-up view, north-up view, bird's eye view, top view, etc.), and set scale. However, the area of map data the user wishes to see may differ depending on the circumstances.

The present invention was devised in order to resolve this problem with the related art, and provides a map image display device, a map image display method, and a computer program which can preferentially provide map data of an area helpful to a user after removing an auxiliary image, and improve user convenience.

In order to achieve the above, a map image display device according to a first aspect of the present invention includes: a map data storage medium that stores map data; a map image display unit that reads the map data from the map data storage medium, and displays a map image in a map display area of a display device; a first display mode changing unit that displays at a prescribed timing an auxiliary image different from the map image in a specific area that is part of the map display area, and changes a display mode of the map image on the display device to a first display mode in which the map data of a first target area is read from the map data storage medium and a map image of said first target area displayed in the map display area excluding the specific area; an operation receiving unit that receives an operation from a user; and a second display mode changing unit that removes the auxiliary image displayed on the display device from the display device if a prescribed operation is received by the operation receiving unit, and in response to the removal, changes the display mode of the map image on the display device from the first display mode to a second display mode in which the map data of a second target area is read from the map data storage medium and a map image comprising (or representing, without being limited thereto,) said second target area displayed in the map display area including the specific area. The second display mode changing unit reads, from the map data storage medium, the map data of an adjacent area next to the first target area when the prescribed operation is received by the operation receiving unit, and sets the second target area so that it comprises (or is based on) the map data of the adjacent area. (The second target area may thus comprise, or encompass, or be based on, the adjacent area).
Note that the "auxiliary image" includes, for example, a menu screen, a help screen, and an intersection enlarged view.
In addition, the phrase "in response to the removal" includes removing the auxiliary image and changing from the first display mode to the second display mode at the same time, and changing from the first display mode to the second display mode following a prescribed time delay after removing the auxiliary image.

The map image display device according to a second aspect of the present invention is the map image display device of the first aspect, wherein the second display mode changing unit sets the second target area based on information pertaining to one of a point and a guidance route to a destination within the adjacent area when the prescribed operation is received by the operation receiving unit.

The map image display device according to a third aspect of the present invention is the map image display device of the first or second aspect, wherein the second display mode changing unit removes the auxiliary image displayed on the display device from the display device by slidingly moving the auxiliary image when the prescribed operation is received by the operation receiving unit, and in response to the sliding movement of the auxiliary image, changes in stages the display mode of the map image on the display device from the first display mode to the second display mode.
Note that the phrase "in response to the sliding movement of the auxiliary image, changes...to the second display mode" includes slidingly moving the auxiliary image and starting to change from the first display mode to the second display mode at the same time, and starting to change from the first display mode to the second display mode following a prescribed time delay after sliding of the auxiliary image is started.

The map image display device according to a fourth aspect of the present invention is the map image display device of the third aspect, wherein the second display mode changing unit, if the guidance route crosses a boundary between the first target area and a covered area corresponding to a position of the specific area when the prescribed operation is received by the operation receiving unit, sets the first target area and the covered area when the prescribed operation is received by the operation receiving unit as the second target area, and in response to the sliding movement of the auxiliary image, displays in stages the map image based on the map data of the covered area in the specific area.

The map image display device according to a fifth aspect of the present invention is the map image display device of the third aspect, wherein the second display mode changing unit, if the guidance route does not cross the boundary between the first target area and the covered area corresponding to the position of the specific area when the prescribed operation is received by the operation receiving unit, sets the first target area and the adjacent area on a side opposite the covered area with respect to the first target area when the prescribed operation is received by the operation receiving unit as the second target area, and in response to the sliding movement of the auxiliary image, displays the map image based on the map data of the second target area in the map display area including the specific area by slidingly moving the map image in the direction of the auxiliary image.

The map image display device according to a sixth aspect of the present invention is the map image display device of the fifth aspect, wherein the second display mode changing unit varies one of a distance and a speed with which the map image is slidingly moved depending on whether the guidance route in the adjacent area satisfies a prescribed condition.

The map image display device according to a seventh aspect of the present invention is the map image display device of the sixth aspect, wherein the prescribed condition is any one of a guidance point on the guidance route in the adjacent area, at least a prescribed number of guidance points on the guidance route in the adjacent area, and the guidance point within a prescribed distance from an outer edge of the first target area on the guidance route in the adjacent area.
Note that the "guidance point" is a point at which travel guidance is provided for the guidance route, such as a guided intersection for which right or left turn guidance is provided, or a point at which lane change guidance is provided, for example.

The map image display device according to an eighth aspect of the present invention is the map image display device of any one of the first to third aspects, wherein the second display mode changing unit, if the point satisfying the prescribed condition is included in the map data of the covered area corresponding to the position of the specific area when the prescribed operation is received by the operation receiving unit, sets the first target area and the covered area when the prescribed operation is received by the operation receiving unit as the second target area, and in response to the removal of the auxiliary image, displays in stages the map image based on the map data of the covered area in the specific area.

The map image display device according to a ninth aspect of the present invention is the map image display device of any one of the first to eighth aspects, wherein the map image display device is installed in a vehicle, and the auxiliary image is an image that enlarges and shows an intersection positioned ahead in the traveling direction of the vehicle.

A map image display method according to a tenth aspect of the present invention includes the steps of: reading map data from a map data storage medium that stores the map data, and displaying a map image in a map display area of a display device; displaying at a prescribed timing an auxiliary image different from the map image in a specific area that is part of the map display area, and changing a display mode of the map image on the display device to a first display mode in which the map data of a first target area is read from the map data storage medium and a map image of said first target area is displayed in the map display area excluding the specific area; receiving an operation from a user; and removing the auxiliary image displayed on the display device from the display device if a prescribed operation is received at the operation receiving step, and in response to the removal, changing the display mode of the map image on the display device from the first display mode to a second display mode in which the map data of a second target area is read from the map data storage medium and a map image comprising said second target area is displayed in the map display area including the specific area. At the second display mode changing step, the map data of an adjacent area next to the first target area when the prescribed operation is received by the operation receiving unit is read from the map data storage medium, and the second target area is set so that it comprises (or is based on) the map data of the adjacent area.

A computer program according to an eleventh aspect of the present invention performs in a computer the functions of: reading map data from a map data storage medium that stores the map data, and displaying a map image in a map display area of a display device; displaying at a prescribed timing an auxiliary image different from the map image in a specific area that is part of the map display area, and changing a display mode of the map image on the display device to a first display mode in which the map data of a first target area is read from the map data storage medium and a map image of said first target area is displayed in the map display area excluding the specific area; receiving an operation from a user; and removing the auxiliary image displayed on the display device from the display device if a prescribed operation is received by the operation receiving function, and in response to the removal, changing the display mode of the map image on the display device from the first display mode to a second display mode in which the map data of a second target area is read from the map data storage medium and a map image comprising said second target area is displayed in the map display area including the specific area. The second display mode changing function reads, from the map data storage medium, the map data of an adjacent area next to the first target area when the prescribed operation is received by the operation receiving function, and sets the second target area so that it comprises (or is based on) the map data of the adjacent area.
A computer program according to a twelfth aspect of the invention comprises instructions for implementing the above-defined map image display method, when it is run on a computing device or computer, such as an on-vehicle navigation device, a mobile phone, etc.

According to the thus configured map image display device of the first aspect, the area of the map data to be newly displayed after removing the auxiliary image is set based on the map data of the adjacent area next to the area of the map data currently displayed. It is thus possible to preferentially provide the map data of an area helpful to the user. As a consequence, for example, if important points for guiding the user or the guidance route are included in the adjacent area, the user can easily see the information of the important points for guidance or the shape of the guidance route at an earlier timing, which increases user convenience.

According to the map image display device of the second aspect, the area of the map data to be newly displayed after removing the auxiliary image is set based on the guidance route or the information pertaining to points included in the adjacent area. Therefore, a map image effective for providing the guidance route and the points based on the shape of the guidance route and the arranged state of the points can be displayed in the second display mode.

According to the map image display device of the third aspect, the auxiliary image is removed from the display device by slidingly moving the auxiliary image. In response to the sliding movement of the auxiliary image, the display mode of the map image on the display device is changed in stages from the first display mode to the second display mode. Therefore, the user can easily see the correspondence relation between the map image of the first display mode and the map image of the second display mode. Even if the first display mode is changed to the second display mode, there is no risk of the user losing sight of the current position in the map image.

According to the map image display device of the fourth aspect, if the guidance route is included in the covered area in particular within the adjacent area, the map data of the adjacent area that includes the guidance route can be preferentially displayed. Therefore, the user can easily see the shape of the guidance route at an earlier timing, which increases user convenience.

According to the map image display device of the fifth aspect, if the guidance route is included in an area other than the covered area in particular within the adjacent area, the map data of the adjacent area likely to include the guidance route can be preferentially displayed. Therefore, the user can easily see the shape of the guidance route at an earlier timing, which increases user convenience.

According to the map image display device of the sixth aspect, if the guidance route is included in the adjacent area, the sliding mode of the map image varies on the basis of the shape of the guidance route or the like included in the adjacent area. Therefore, an appropriate map image based on the shape of the guidance route or the like can be displayed. It is thus possible to provide the shape of the guidance route or the like to the user in a suitable mode.

According to the map image display device of the seventh aspect, if the guidance route is included in the adjacent area, the sliding mode of the map image varies on the basis of the layout of the guidance points of the guidance route included in the adjacent area. Therefore, an appropriate map image based on the layout of the guidance points of the guidance route can be displayed. It is thus possible to provide the guidance points of the guidance route to the user in a suitable mode.

According to the map image display device of the eighth aspect, if the points satisfying the prescribed condition are included in the adjacent area, the map data of the adjacent area that includes the points satisfying the prescribed condition can be preferentially displayed. Therefore, the user can easily see the information of the points satisfying the prescribed condition at an earlier timing, which increases user convenience.

According to the ninth aspect, the map image display device may be applied when a navigation device installed in a vehicle displays an enlarged view of an intersection. As a consequence, if an operation to remove the enlarged view of the intersection is performed, the map data of an area helpful to the user can be newly and preferentially displayed and provided.

According to the map image display method of the tenth aspect, the area of the map data to be newly displayed after removing the auxiliary image is set based on the map data of the adjacent area next to the area of the map data currently displayed. It is thus possible to preferentially provide the map data of an area helpful to the user. As a consequence, for example, if important points for guiding the user or the guidance route are included in the adjacent area, the user can easily see the information of the important points for guidance or the shape of the guidance route at an earlier timing, which increases user convenience.

According to the computer program of the eleventh aspect, the area of the map data to be newly displayed after removing the auxiliary image is set based on the map data of the adjacent area next to the area of the map data currently displayed. It is thus possible to preferentially provide the map data of an area helpful to the user. As a consequence, for example, if important points for guiding the user or the guidance route are included in the adjacent area, the user can easily see the information of the important points for guidance or the shape of the guidance route at an earlier timing, which increases user convenience.

### BRIEF DESCRIPTION OF THE DRAWINGS

FIG. 1 is a block diagram that shows a navigation device according to a first embodiment;
FIG. 2 is a diagram that shows a configuration of a navigation ECU;
FIGS. 3A and 3B are diagrams that show examples of a travel guidance screen displayed on a liquid crystal display during vehicle travel;
FIGS. 4A to 4C are diagrams that show an example of changing a display mode of the travel guidance screen when an operation to remove an intersection enlarged view is received;
FIG. 5 is a diagram for explaining a problem with related art;
FIGS. 6A and 6B are flowcharts of an image display control processing program according to the first embodiment;
FIG. 7 is a diagram that shows a first target area of map data to be displayed on the travel guidance screen, and adjacent areas next to the first target area;
FIGS. 8A to 8C are diagrams that show an example of changing the display mode of a liquid crystal display 15 at step 10;
FIGS. 9A to 9C are diagrams that show an example of changing the display mode of the liquid crystal display 15 at step 11;
FIGS. 10A and 10B are flowcharts of an image display control processing program according to a second embodiment;
FIGS. 11A to 11C are diagrams that show an example of changing the display mode of the liquid crystal display 15 at step 33;
FIGS. 12A and 12B are flowcharts of an image display control processing program according to a third embodiment; and
FIGS. 13A to 13C are diagrams that show an example of changing the display mode of the liquid crystal display 15 at step 49.

### DETAILED DESCRIPTION OF THE EMBODIMENTS

A map image display device according to the present invention will be described in detail below on the basis of first to third embodiments practiced in a navigation device and with reference to the drawings.

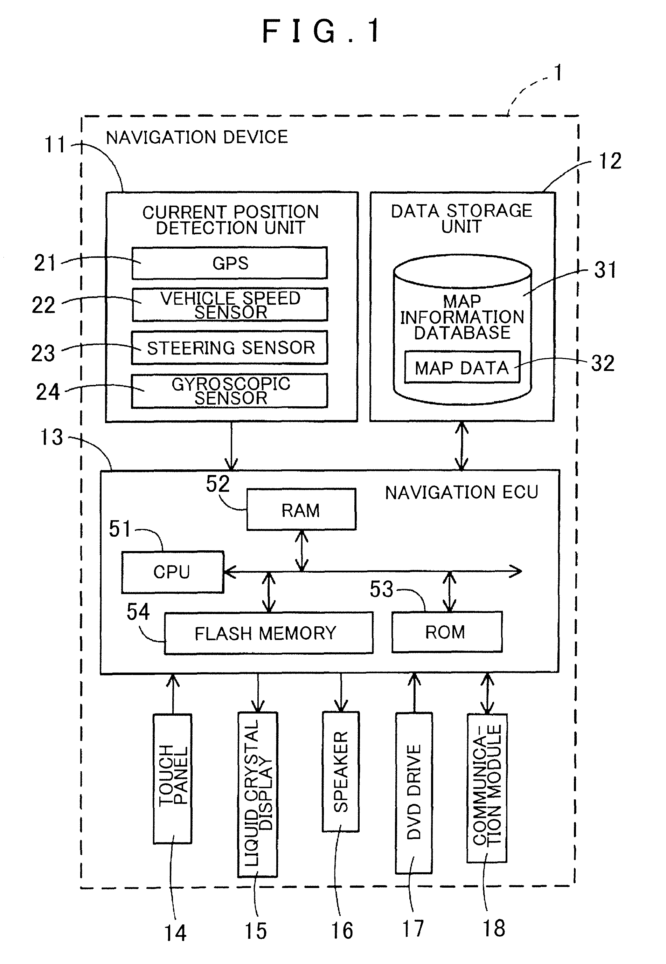

First, an overall configuration of a navigation device 1 according to the first embodiment will be explained using FIG. 1. FIG. 1 is a block diagram that shows the navigation device 1 according to the first embodiment.
As shown in FIG. 1, the navigation device 1 according to the first embodiment includes a current position detection unit 11 that detects a current position of a vehicle installed with the navigation device 1; a data storage unit 12 that stores various types of data; a navigation ECU 13 that performs various types of computational processing based on input information; a touch panel 14 that receives an operation from a user; a liquid crystal display 15 that displays a map of the vehicle's surroundings, an enlarged view of an intersection, and the like for the user; a speaker 16 that outputs voice guidance related to route guidance; a DVD drive 17 that reads a DVD serving as a storage medium; and a communication module 18 that performs communication with an information center such as a probe center or the VICS center.

Each of the configuring elements of the navigation device 1 will be explained in order below.
The current position detection unit 11 includes a GPS 21, a vehicle speed sensor 22, a steering sensor 23, and a gyroscopic sensor 24. The current position detection unit 11 is capable of detecting the vehicle's current position, heading, running speed, as well as the current time and the like. The vehicle speed sensor 22, in particular, is a sensor for detecting the vehicle's speed and distance traveled. The vehicle speed sensor 22 generates a pulse in response to the rotation of the vehicle's drive wheels and outputs a pulse signal to the navigation ECU 13. The navigation ECU 13 counts the generated pulses to compute the revolution speed of the drive wheels and the distance traveled. Note that it is not necessary for the navigation device 1 to be provided with all of the five types of sensors described above, and it is acceptable for the navigation device 1 to be provided with only one or a plurality among the five types of sensors.

The data storage unit 12 includes a hard disk (not shown in the drawing) that serves as an external storage device and recording medium, and a read/write head (not shown in the drawing) that serves as a drive for reading a map information database 31, prescribed programs, and so on from the hard disk and writing prescribed data to the hard disk. Instead of a hard disk, the data storage unit 12 may also be configured from an optical disk such as a memory card, a CD, or a DVD.

Here, the map information database 31 is a storage unit in which map data 32 is stored. The map data 32 includes link data pertaining to roads (links), node data pertaining to node points, point data pertaining to points such as facilities, map display data for displaying a map, intersection data pertaining to intersections, search data for finding routes, and search data for finding points.

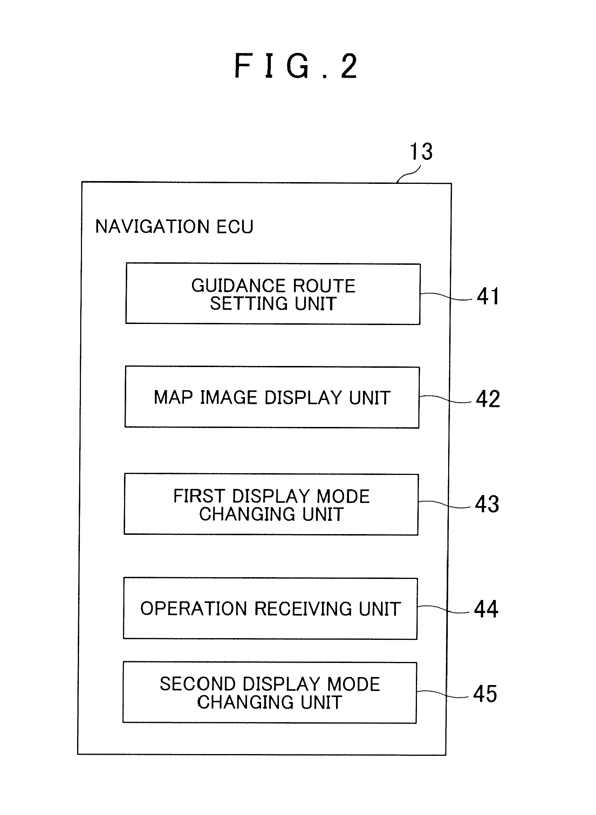

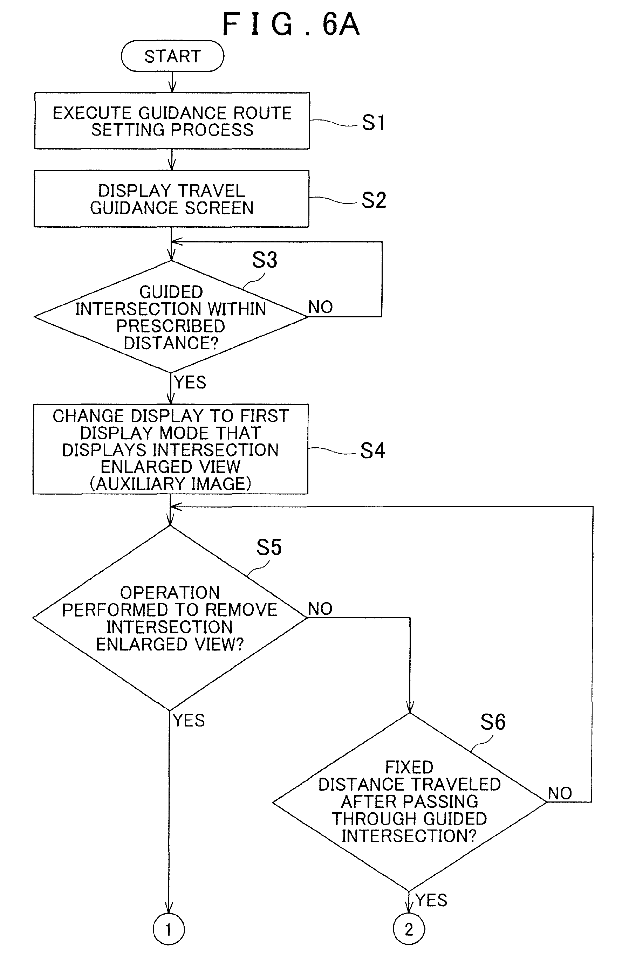

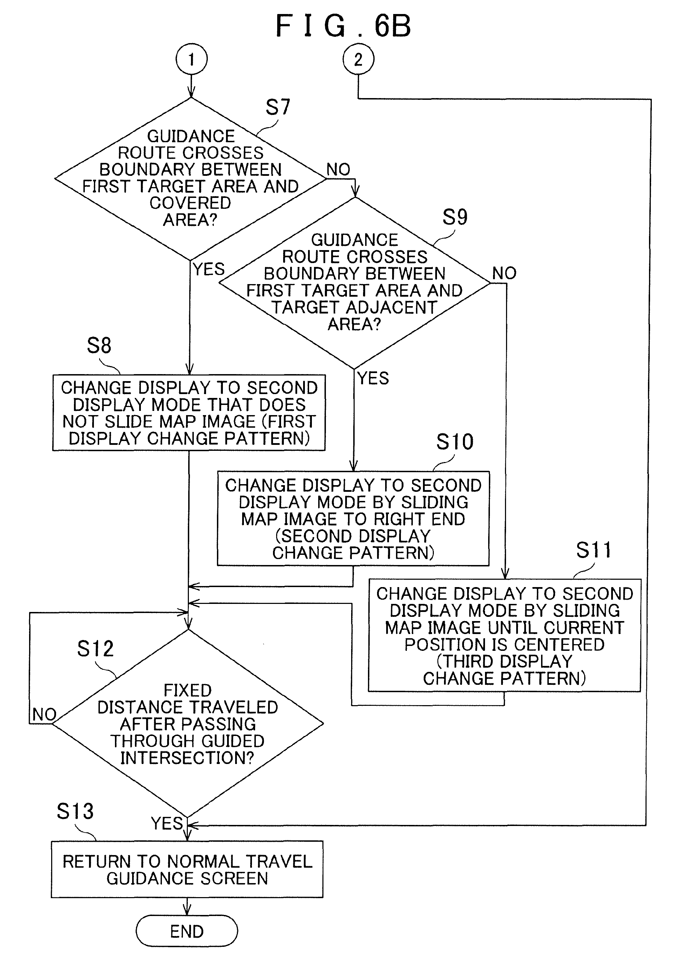

The navigation ECU 13 is an electronic control unit that performs an overall control of the navigation device 1. The navigation ECU 13 includes a CPU 51 that serves as a computational device and a control device; a RAM 52 that is used as a working memory when the CPU 51 performs various types of computational processing, and also stores route data and the like when a route is found; a ROM 53 that stores control programs as well as an image display control processing program described later (see FIGS. 6A and 6B); and an internal storage device such as a flash memory 54 that stores programs read from the ROM 53. Note that the navigation ECU 13 configures various units shown in FIG. 2 that serve as processing algorithms. For example, a guidance route setting unit 41 sets a guidance route from a departure point to a destination. A map image display unit 42 reads the map data 32 from the map information database 31 to display a map image in the map display area of the liquid crystal display 15. A first display mode changing unit 43 displays an auxiliary image (e.g., an enlarged view of an intersection) different from the map image in a specific area that is part of the map display area at a prescribed timing (e.g., a timing when the vehicle is within a prescribed distance from a guided intersection). The first display mode changing unit 43 also changes a display mode of the map image on the liquid crystal display 15 to a first display mode, wherein the map data 32 of a first target area is read from the map information database 31 and a map image displayed in the map display area excluding the specific area. An operation receiving unit 44 receives a user operation. A second display mode changing unit 45 removes from the liquid crystal display 15 an auxiliary image displayed on the liquid crystal display 15 when a prescribed operation is received (e.g., flicking the auxiliary image). In accordance with this removal, the second display mode changing unit 45 also changes the display mode of the map image on the liquid crystal display 15 from the first display mode to a second display mode, wherein the map data 32 of a second target area is read from the map information database 31 and a map image displayed in the map display area including the specific area.

A touch panel 14 is disposed on a front surface of the display area of the liquid crystal display 15. The touch panel 14 is operated to scroll a map image, select a button disposed in the display area, and the like. In the navigation device I according to the first embodiment, in particular, the touch panel 14 is also operated to remove an auxiliary image such as an enlarged view of an intersection displayed on the liquid crystal display 15. Based on a detection signal output from the touch panel 14 in response to the user operating the touch panel 14, the navigation ECU 13 also detects touch coordinates that are the coordinates of a point touched by the user, as well as operations (i.e., dragging or flicking) to move a touched position when selecting a selection target, such as a map image, an enlarged view of an intersection, a button, and the like. The navigation ECU 13 performs a control to execute various types of operations corresponding to the detected touch operations, touch coordinates, and the like.

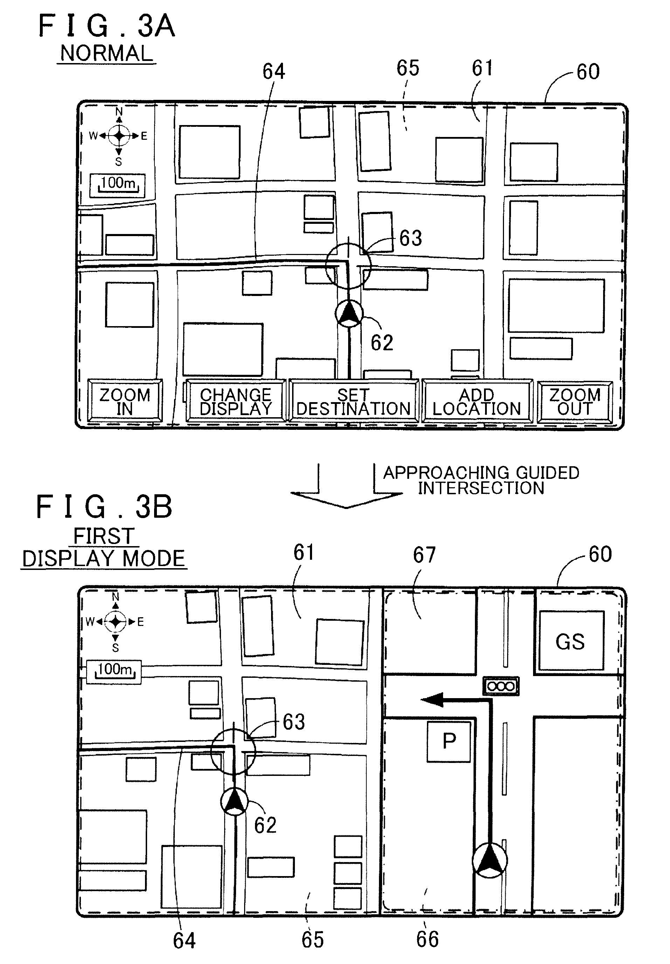

The liquid crystal display 15 displays a map image that includes roads, traffic information, operation guidance, an operation menu, key guidance, a guidance route from the departure point to the destination, travel guidance information pertaining to travel guidance along the guidance route, news, a weather forecast, the time, e-mail, a television program, and the like. In addition, the liquid crystal display 15 is also used to display information pertaining to facilities found in a facility search. Here, FIGS. 3A and 3B are diagrams that show examples of a travel guidance screen 60 displayed on the liquid crystal display 15 during vehicle travel.

As shown in FIG. 3A, the travel guidance screen 60 displayed on the liquid crystal display 15 displays the following: a map image 61 around the current position of the vehicle; a host vehicle position marker 62 that indicates the current position of the vehicle matched to the map; a center cursor 63 that specifies the center position of the map display area; and a guidance route 64 that is set by the navigation device 1. Note that the travel guidance screen 60 designates an entire area within the display area of the liquid crystal display 15 other than a partial area in which buttons and a scale are disposed as a map display area 65 for displaying the map image 61. The map data of an area corresponding to the map display area 65 is read from the map information database 31 and displayed in the map display area 65. The position of the host vehicle position marker 62 is fixed to a position below the center of the map display area 65 as a general rule. By referring to the travel guidance screen 60, the user can see facilities currently around the vehicle, road shapes, the shape of the guidance route, and the like.

As shown in FIG. 3B, when the vehicle is within a prescribed distance (e.g., within 300 meters) from a guided intersection, that is, an intersection for which guidance such as turning right or left is performed, the travel guidance screen 60 shows an intersection enlarged view 67 that is an auxiliary image in the specific area 66 that takes up roughly a right half of the map display area 65. Here, the intersection enlarged view 67 is configured from a view that enlarges a particular guided intersection ahead in the traveling direction of the vehicle, and guidance information that guides the vehicle's travel at the guided intersection (e.g., arrows or the like that indicate lane guidance and the traveling direction). The map data of an area (referred to as a "first target area" below) corresponding to the map display area 65, excluding the specific area 66, is read from the map information database 31 and displayed in the map display area 65 other than the specific area 66. The position of the host vehicle position marker 62 is fixed to a position below the center of the map display area 65 excluding the specific area 66 as a general rule. By referring to the travel guidance screen 60, the user can see facilities currently around the vehicle, road shapes, and the shape of the guidance route, for example, and at the same time also see how to travel through the particular guided intersection ahead in the traveling direction. Note that a display mode in which the intersection enlarged view 67 is displayed in the specific area 66 of the liquid crystal display 15, and the map image 61 is displayed in the map display area 65 excluding the specific area 66, as shown in FIG. 3B, corresponds to a "first display mode" of the present invention.

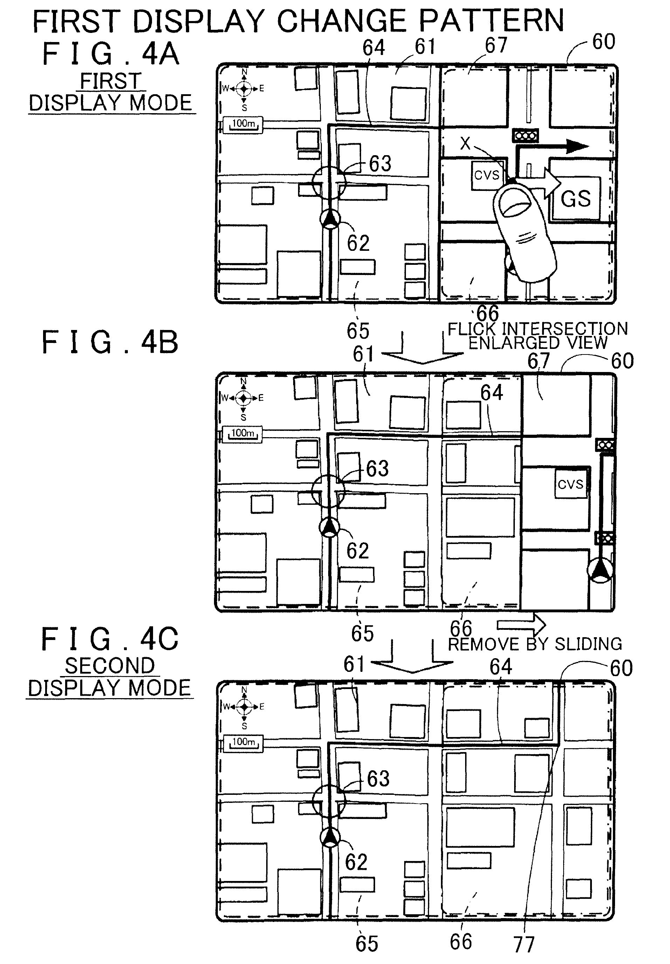

When the intersection enlarged view 67 is displayed, the display area of the map image 61 is reduced in size compared to when the intersection enlarged view 67 is not displayed. Accordingly, the user may wish to see facilities, road shapes, the guidance route, and the like outside the area displayed in the map display area 65 excluding the specific area 66 while the intersection enlarged view 67 is displayed on the travel guidance screen 60. In such case, the intersection enlarged view 67 can be removed and a display target area of the map image 61 enlarged. To remove the intersection enlarged view 67, as shown in FIG. 4A, the user touches the intersection enlarged view 67 to select the intersection enlarged view 67, and flicks the selected intersection enlarged view 67. For example, as shown in FIG. 4A, the user touches a point X and flicks in the direction of the arrow from the point X, and as shown in FIG. 4B, then slidingly moves the intersection enlarged view 67 in a direction that slides the intersection enlarged view 67 off the screen (rightward in FIG. 4B, which is in the opposite direction from the map). Thus, the intersection enlarged view 67 is removed in stages from the display area of the liquid crystal display 15. Consequently, as shown in FIG. 4C, the display target area of the liquid crystal display 15 that displays the map image 61 is enlarged from the map display area 65 excluding the specific area 66 to the map display area 65 including the specific area 66. The map data of an area (referred to as a "second target area" below) is read from the map information database 31 and displayed in the map display area 65 including the specific area 66. By referring to the travel guidance screen 60 on which the display target area of the map image 61 is enlarged, the user can see facilities, road shapes, the guidance route, and the like in a wider area. Note that the display mode in which the intersection enlarged view 67 is removed and the map image 61 is displayed on the liquid crystal display 15 in the map display area 65 including the specific area 66, as shown in FIG. 4C, corresponds to a "second display mode" of the present invention.
When the vehicle travels a prescribed distance (e.g., 50 meters) after passing through the guided intersection, the liquid crystal display 15 returns to the normal travel guidance screen 60 shown in FIG. 3A.

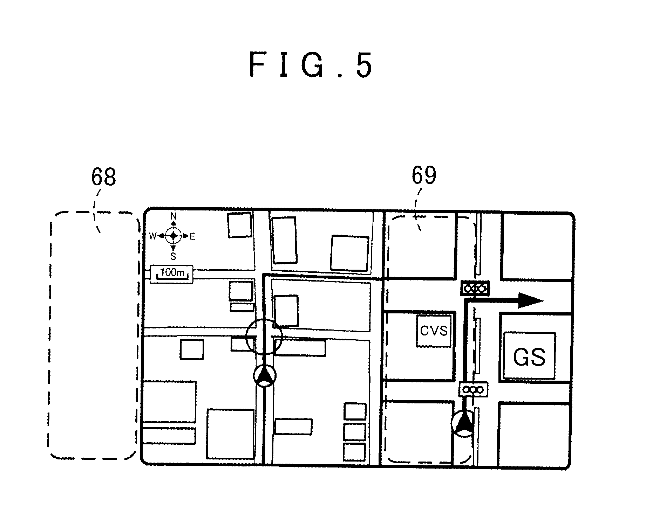

Here, the second target area, which is an area of the map data to be displayed in the second display mode, is an area wider in the left-right direction than the first target area. That is, in the second display mode, an area adjacent in the left-right direction to the first target area becomes a new display target. According to the related art (JP-A-2010-66227) described earlier, the second target area is uniformly determined based on the current position of the host vehicle, display type (nose-up view, north-up view, bird's eye view, top view, etc.), and set scale. As a consequence, even if an area that includes the guidance route and important points for guiding the user is adjacent to the first target area, such an area may not be included in the display target after removing the intersection enlarged view 67. However, as shown in FIG. 5, for example, when the guidance route and important points (e.g., the destination, waypoints, saved points) for guiding the user are included in a left-adjacent area 68 that is adjacent to a left side of the first target area, the map data of the left-adjacent area 68 should be preferentially designated as a display target. Alternatively, when the guidance route and important points for guiding the user are included in a right-adjacent area 69 that is adjacent to a right side of the first target area, the map data of the right-adjacent area 69 should be preferentially designated as a display target.

Thus, in the present embodiment, the second target area, which is an area of the map data to be displayed in the second display mode, is set by the navigation ECU 13 as described later. More specifically, the navigation ECU 13 reads the map data of an adjacent area that is next to the first target area when a flicking operation is received, and sets the second target area based on the map data of the adjacent area. The map data of the adjacent area that is read in order to set the second target area is included in the point data and the data pertaining to the guidance route set by the navigation device 1. A method for setting the second target area will be described in more detail later.

The speaker 16 outputs traffic information guidance and voice guidance for guiding travel along the guidance route on the basis of an instruction from the navigation ECU 13. In addition, the speaker 16 is also used to output information pertaining to facilities found in a facility search.

The DVD drive 17 is a drive capable of reading data stored on a recording medium such as a DVD or a CD. Music and videos are played, and the map information database 31 is updated and the like based on the data that is read.

The communication module 18 is a communication device, such as a mobile telephone or a DCM, for example, that receives traffic information that is transmitted from a traffic information center, such as the Vehicle Information and Communication System (VICS (registered trademark)) center, a probe center, or the like, for example. The traffic information includes various types of information, such as congestion information, regulatory information, and traffic accident information.

Next, the image display control processing program that is executed by the navigation ECU 13 in the navigation device 1 that has the configuration described above will be explained based on FIGS. 6A and 6B. FIGS. 6A and 6B flowcharts of the image display control processing program according to the first embodiment. Here, the image display control processing program is executed after the vehicle power is turned on. The image display control processing program is a program that displays the travel guidance screen 60 that includes a map image on the liquid crystal display 15, and controls the display content of the travel guidance screen based on operation of the touch panel 14. Note that the program shown in the flowcharts of FIGS. 6A and 6B is stored in the RAM 52 or the ROM 53 that are provided in the navigation device 1 and is executed by the CPU 51.

First, at step (abbreviated to "S" below) 1 in the image display control processing program, the CPU 51 sets a destination based on an operation of the user, searches for routes from a departure point (e.g., the current position of the vehicle) to the set destination, and sets a recommended route found as the guidance route. Information pertaining to the set guidance route is stored in the RAM 52. Note that the search for the guidance route uses the commonly known Dykstra method or the like.

Next, at S2, the CPU 51 displays on the liquid crystal display 15 the travel guidance screen 60 for guiding the vehicle's travel. Note that during normal times, as shown in FIG. 3A, the travel guidance screen 60 displayed on the liquid crystal display 15 shows the guidance route 64 set by the navigation device 1 in addition to the map image 61 around the current position of the vehicle. In addition, an entire area within the display area of the liquid crystal display 15 other than a partial area that includes buttons and a scale is the map display area 65 for displaying the map image 61. At S2, the CPU 51 reads the map data 32 of an area corresponding to the map display area 65 from the map information database 31 and displays the area in the map display area 65. As a general rule, the position of the host vehicle position marker 62 is fixed to a position below the center of the map display area 65, and the area of map data displayed in the map display area 65 changes in accordance with the movement of the vehicle.

Next, at S3, the CPU 51 determines whether there is a guided intersection for which travel guidance such as a right or left turn is provided within a prescribed distance (e.g. within 300 meters) ahead in the traveling direction of the vehicle. Note that the determination processing at S3 is performed based on the vehicle's current position and heading detected by the current position detection unit 11, and the map data 32 stored in the map information database 31.

If it is determined that there is a guided intersection within the prescribed distance ahead in the traveling direction of the vehicle (S3: Yes), the CPU 51 proceeds to S4. However, if it is determined that there is no guided intersection within the prescribed distance ahead in the traveling direction of the vehicle (S3; No), the CPU 51 continues to display the normal travel guidance screen 60 on the liquid crystal display 15.

At S4, the CPU 51 changes the display mode of the liquid crystal display 15 from the normal travel guidance screen 60 to the travel guidance screen 60 based on the first display mode. Here, the first display mode displays the intersection enlarged view 67, which is an auxiliary image in the specific area 66 that takes up the right half of the map display area 65, as shown in FIG. 3B. The map data of the first target area corresponding to the map display area 65, excluding the specific area 66, is read from the map information database 31 and displayed in the map display area 65 other than the specific area 66. As a general rule, the position of the host vehicle position marker 62 is fixed to a position below the center of the map display area 65 excluding the specific area 66, and the area of map data displayed in the map display area 65 excluding the specific area 66 changes in accordance with the movement of the vehicle.

Next, at S5, the CPU 51 determines whether an operation from the user to remove the intersection enlarged view 67 is received based on the detection signal transmitted from the touch panel 14. Specifically, if an operation is received in which the user touches the intersection enlarged view 67 to select the intersection enlarged view 67, and then flicks the intersection enlarged view 67 in a direction that slidingly moves the intersection enlarged view 67 off the screen (rightward in FIG. 4B, which is in the opposite direction from the map), it is determined that an operation from the user to remove the intersection enlarged view 67 is received. Note that the determination processing at S5 is performed based on the touch coordinates, that is, the coordinates of a point the user touches on the touch panel 14, and shifting of the touch coordinates.

If it is determined that the operation to remove the intersection enlarged view 67 is received from the user (S5: Yes), the CPU 51 proceeds to S7. However, if it is determined that the operation to remove the intersection enlarged view 67 is not received from the user (S5: No), the CPU 51 proceeds to S6.

At S6, the CPU 51 determines whether the vehicle has passed through the guided intersection determined at S3, and traveled at least a prescribed distance (e.g., 50 meters).

If it is determined that the vehicle has passed through the guided intersection determined at S3 and traveled at least the prescribed distance (S6: Yes), the CPU 51 returns the display content of the liquid crystal display 15 to the normal travel guidance screen 60 (FIG. 3A) (S 13). The image display control processing program is then ended. However, if it is determined that the vehicle has not passed through the guided intersection determined at S3 or not traveled at least the prescribed distance after passing through the guided intersection (S6: No), the CPU 51 returns to S5 and continues to display the travel guidance screen 60 based on the first display mode on the liquid crystal display 15.

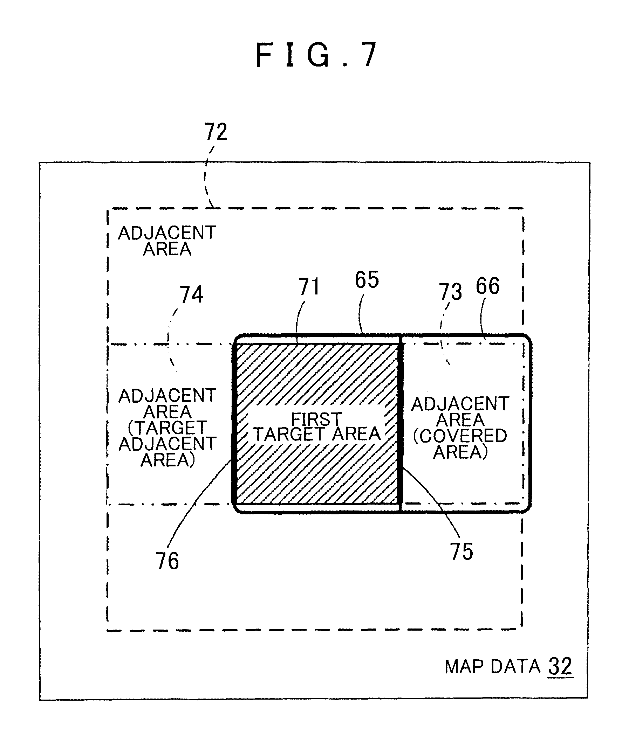

Meanwhile, at S7, the CPU 51 acquires from the RAM 52 information on the guidance route set by the navigation device 1, and determines whether the guidance route crosses a boundary between the first target area and a covered area when the operation to remove the intersection enlarged view 67 is received. Note that the covered area is an area of the map data 32 corresponding to the position of the specific area 66. The determination processing at S7 will now be described in detail using FIG. 7. FIG. 7 is a diagram that shows, based on the first display mode, the first target area of the map data 32 to be displayed on the travel guidance screen 60, and adjacent areas next to the first target area.

The area of the map image 61 to be displayed in the first display mode, as shown in FIG. 3B, is the map display area 65 excluding the specific area 66. Thus, the area of the map data 32 corresponding to the position of the map display area 65 excluding the specific area 66 is a first target area 71 as shown in FIG. 7. An area of the map data next to the first target area 71 is an adjacent area 72 (an area extending from the outer edge of the first target area through the lateral width of the specific area 66). Within the adjacent area 72, an area in particular corresponding to the specific area 66 is a covered area 73. Also within the adjacent area 72, an area in particular positioned with respect to the first target area 71 on the side opposite the covered area 73 is a target adjacent area 74. At S7, the CPU 51 determines whether the guidance route crosses a boundary 75 between the first target area 71 and the covered area 73 when the operation to remove the intersection enlarged view 67 is received. Note that the covered area 73 and the target adjacent area 74 of the adjacent area 72 have the same shape. In addition, the distance from the upper edge of the first target area 71 to the upper edge of the adjacent area 72 and the distance from the lower edge of the first target area 71 to the lower edge of the adjacent area 72 are equal, and the lateral widths of the target adjacent area 74 and the covered area 73 are also equal.

If it is determined that the guidance route crosses the boundary 75 between the first target area 71 and the covered area 73 when the operation to remove the intersection enlarged view 67 is received (S7: Yes), the CPU 51 proceeds to S8. However, if it is determined that the guidance route does not cross the boundary 75 between the first target area 71 and the covered area 73 when the operation to remove the intersection enlarged view 67 is received (S7: No), the CPU 51 proceeds to S9.

At S8, according to a first display change pattern, the CPU 51 changes the display mode of the liquid crystal display 15 from the travel guidance screen 60 based on the first display mode to the travel guidance screen 60 based on the second display mode. Here, the second display mode displays the map image 61 for the map display area 65 including the specific area 66 within the map display area 65, as shown in FIG. 4C. The map data of the second target area corresponding to the map display area 65, including the specific area 66, is read from the map information database 31 and displayed in the map display area 65 including the specific area 66. At S8, the CPU 51 sets the first target area 71 and the covered area 73 (see FIG. 7) when the operation to remove the intersection enlarged view 67 is received as the second target area. In response to the sliding movement of the intersection enlarged view 67, the CPU 51 reads the map data of the covered area 73 in the specific area 66 and displays the map image in stages, thus changing the display mode of the liquid crystal display 15 from the first display mode to the second display mode.

Here, FIGS. 4A to 4C are diagrams that show an example of changing the display mode of the liquid crystal display 15 based on the first display change pattern at S8. As shown in FIGS. 4A to 4C, at S8, the intersection enlarged view 67 is slidingly moved rightward and removed in stages from the display area of the liquid crystal display 15. In response to the sliding movement of the intersection enlarged view 67, the map image based on the map data of the covered area 73 is displayed in stages in the specific area 66 without sliding the map image in the left map area. Consequently, the map image based on the map data of the covered area 73 where the guidance route 64 is positioned (the right area of the first target area 71) is preferentially displayed on the liquid crystal display 15. Thus, the user can see the shape of the guidance route in a range not displayed in the first display mode. In particular, as shown in FIG. 4C, including a guided intersection 77 in the covered area 73 has the effect of enabling the user to see the guided intersection 77 at an earlier timing.

Meanwhile, at S9, the CPU 51 determines whether the guidance route crosses a boundary 76 between the first target area 71 and the target adjacent area 74 when the operation to remove the intersection enlarged view 67 is received (see FIG. 7). Note that the target adjacent area 74 is an area in particular positioned with respect to the first target area 71 on the side opposite the covered area 73 within the adjacent area 72 as described earlier.

If it is determined that the guidance route crosses the boundary 76 between the first target area 71 and the target adjacent area 74 when the operation to remove the intersection enlarged view 67 is received (S9: Yes), the CPU 51 proceeds to S10. However, if it is determined that the guidance route does not cross the boundary 76 between the first target area 71 and the target adjacent area 74 when the operation to remove the intersection enlarged view 67 is received (S9: No), the CPU 51 proceeds to S11.

At S 10, according to a second display change pattern, the CPU 51 changes the display mode of the liquid crystal display 15 from the travel guidance screen 60 based on the first display mode to the travel guidance screen 60 based on the second display mode. At S 10, the CPU 51 sets the first target area 71 and the target adjacent area 74 (see FIG. 7) when the operation to remove the intersection enlarged view 67 is received as the second target area. In response to the sliding movement of the intersection enlarged view 67, the CPU 51 slidingly moves the map image 61 in the direction of the intersection enlarged view 67, thus displaying in stages the map image based on the map data of the first target area 71 and the target adjacent area 74 in the map display area 65 including the specific area 66. Note that, with regard to the sliding movement of the map image 61, the map image 61 may be simultaneously moved in association with the sliding movement of the intersection enlarged view 67, or moved following the elapse of a prescribed time (e.g., 3 seconds) after the sliding movement of the intersection enlarged view 67 is started. If the map image 61 is moved following the elapse of the prescribed time after the sliding movement of the intersection enlarged view 67 is started, the sliding movement of the map image 61 is started following the elapse of the prescribed time after processing similar to that at S8 is started. In other words, the map image based on the map data of the covered area 73 is temporarily displayed in the specific area 66, and the map image 61 is slidingly moved thereafter. As a consequence, after confirming the map data of the covered area 73, the map data of the target adjacent area 74 can also be confirmed. In addition, the sliding distance of the map image 61 is equal to the width of the specific area 66 in the left-right direction. Thus, in the second display change pattern, the display mode of the liquid crystal display 15 is changed from the first display mode to the second display mode. Note that the sliding distance of the map image is not limited to the width of the specific area 66 in the left-right direction, and may be four-fifths or six-fifths of the width, for example.

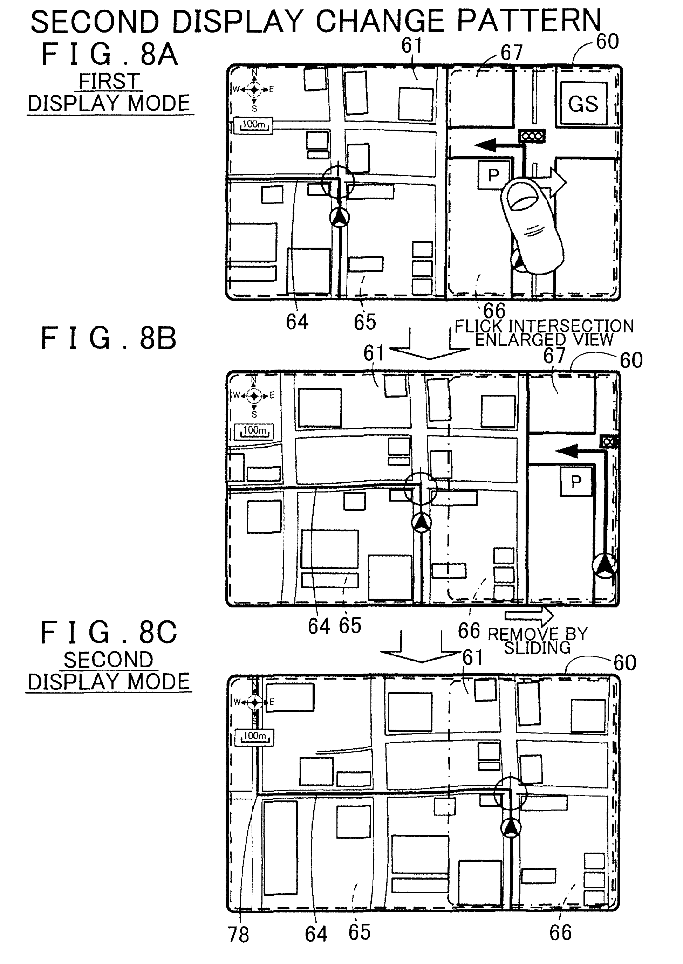

Here, FIGS. 8A to 8C are diagrams that show an example of changing the display mode of the liquid crystal display 15 based on the second display change pattern at S10. As shown in FIGS. 8A to 8C, at S10, the intersection enlarged view 67 is slidingly moved rightward and removed in stages from the display area of the liquid crystal display 15. In response to the sliding movement of the intersection enlarged view 67, the map image 61 is slidingly moved in the direction of the intersection enlarged view 67 until the right end of the first target area 71 is positioned at the right end of the specific area 66, thus displaying in stages the map image based on the map data of the first target area 71 and the target adjacent area 74 in the map display area 65 including the specific area 66. Consequently, the map image of the covered area 74 where the guidance route 64 is positioned (the left area of the first target area 71) is preferentially displayed on the liquid crystal display 15. Thus, the user can see the shape of the guidance route in a range not displayed in the first display mode. In particular, as shown in FIG. 8C, including a guided intersection 78 in the target adjacent area 74 has the effect of enabling the user to see the guided intersection 78 at an earlier timing.

Meanwhile, at S11, according to a third display change pattern, the CPU 51 changes the display mode of the liquid crystal display 15 from the travel guidance screen 60 based on the first display mode to the travel guidance screen 60 based on the second display mode. At S11, the CPU 51 sets the first target area 71, the covered area 73, and a portion of the target adjacent area 74 (see FIG. 7) when the operation to remove the intersection enlarged view 67 is received as the second target area. In response to the sliding movement of the intersection enlarged view 67, the CPU 51 moves the map image 61 in the direction of the intersection enlarged view 67, thus displaying in stages the map image based on the map data of the first target area 71 and a portion of the target adjacent area 74 in the map display area 65 including the specific area 66. Note that, with regard to the sliding movement of the map image, the map image may be simultaneously moved with the sliding movement of the intersection enlarged view 67, or moved following the elapse of a prescribed time (e.g., 3 seconds) after the sliding movement of the intersection enlarged view 67 is started similar to S10. In addition, the sliding distance of the map image 61 is equal to the distance that centers the current position of the vehicle (i.e., the host vehicle position marker 62) in the map image 61 (e.g., one-half the width of the specific area 66). Thus, in the third display change pattern, the display mode of the liquid crystal display 15 is changed from the first display mode to the second display mode. Note that the sliding distance of the map image is not limited to the distance that centers the current position of the vehicle in the map image 61, and may be a distance that positions the current position of the vehicle near the center of the map image 61. However, the sliding distance of the map image is preferably smaller than the sliding distance of the map image at S 10.

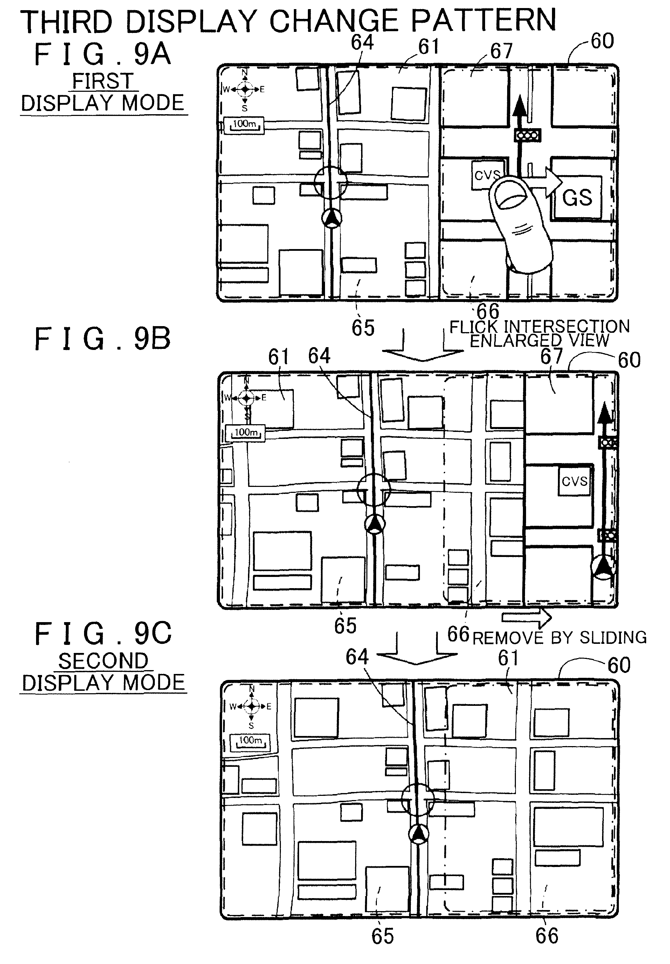

Here, FIGS. 9A to 9C are diagrams that show an example of changing the display mode of the liquid crystal display 15 based on the third display change pattern at S 11. As shown in FIGS. 9A to 9C, at S11, the intersection enlarged view 67 is slidingly moved rightward and removed in stages from the display area of the liquid crystal display 15. In response to the sliding movement of the intersection enlarged view 67, the map image 61 is slidingly moved in the direction of the intersection enlarged view 67 until the current position of the vehicle is centered in the map image 61. Once the current position of the vehicle reaches the centered position of the map image 61, the map image 61 is fixed while the intersection enlarged view 67 continues to be slidingly moved rightward and ultimately removed. Thus, the map image is displayed in stages based on the first target area 71, the covered area 73, and a portion of the target adjacent area 74 in the map display area 65 including the specific area 66. As a consequence, the map image around the current position of the vehicle is displayed on the liquid crystal display 15 without lateral bias. Thus, the user can easily see the road shapes and facilities in a range not displayed in the first display mode.

Next, at S12, the CPU 51 determines whether the vehicle has passed through the guided intersection determined at S3, and traveled at least a prescribed distance (e.g., 50 meters).

If it is determined that the vehicle has passed through the guided intersection determined at S3 and traveled at least the prescribed distance (S12: Yes), the CPU 51 returns the display content of the liquid crystal display 15 to the normal travel guidance screen 60 (FIG. 3A) (S13). The image display control processing program is then ended. However, if it is determined that the vehicle has not passed through the guided intersection determined at S3 or not traveled at least the prescribed distance after passing through the guided intersection (S12: No), the CPU 51 continues to display the travel guidance screen 60 based on the second display mode on the liquid crystal display 15.

As described in detail above, in the navigation device 1 according to the first embodiment, the map image display control method performed by the navigation device 1, and the computer program executed by the navigation device 1, if there is a guided intersection within the prescribed distance ahead in the traveling direction of the vehicle, the travel guidance screen 60 is displayed on the liquid crystal display 15 based on the first display mode in which the intersection enlarged view 67 is displayed in the specific area 66 in part of the map display area 65 (S4). If the operation to remove the intersection enlarged view 67 is received while the travel guidance screen 60 based on the first display mode is displayed on the liquid crystal display 15, the second target area is set. The second target area is an area of the map data to be displayed based on the map data of the adjacent area 72 next to the first target area 71. In response to the removal of the intersection enlarged view 67, the display mode of the map image on the liquid crystal display 15 is changed from the first display mode to the second display mode (S8, S10, S11), wherein the map data of the second target area is read from the map information database 31 and the map image displayed in the map display area 65 including the specific area 66. Therefore, the map data of an area helpful to the user can be preferentially provided.
In addition, the area of the map data to be newly displayed after removing the intersection enlarged view 67 is set based on the guidance route included in the adjacent area 72. Therefore, a map image effective for providing the guidance route based on the shape of the guidance route can be displayed in the second display mode.
The intersection enlarged view 67 is removed from the display device by slidingly moving the intersection enlarged view 67. In response to the sliding movement of the intersection enlarged view 67, the display mode of the map image on the liquid crystal display 15 is changed in stages from the first display mode to the second display mode. Therefore, the user can easily see the correspondence relation between the map image of the first display mode and the map image of the second display mode. Even if the first display mode is changed to the second display mode, there is no risk of the user losing sight of the current position in the map image.
Further, if the guidance route is included in the covered area 73 and the target adjacent area 74 in particular within the adjacent area 72, the map data of the adjacent area 72 that includes the guidance route can be preferentially displayed. Therefore, the user can easily see the shape of the guidance route at an earlier timing, which increases user convenience.
By applying the present invention to an example in which the navigation device 1 installed in the vehicle displays the intersection enlarged view 67, if the operation to remove the intersection enlarged view is performed, the map data of an area helpful to the user can be newly and preferentially displayed and provided.

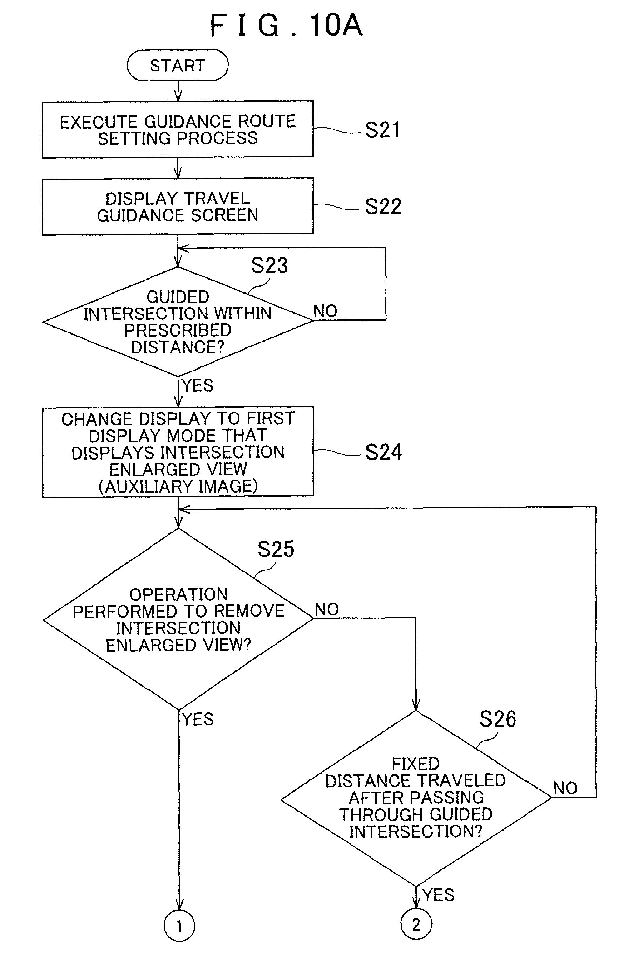

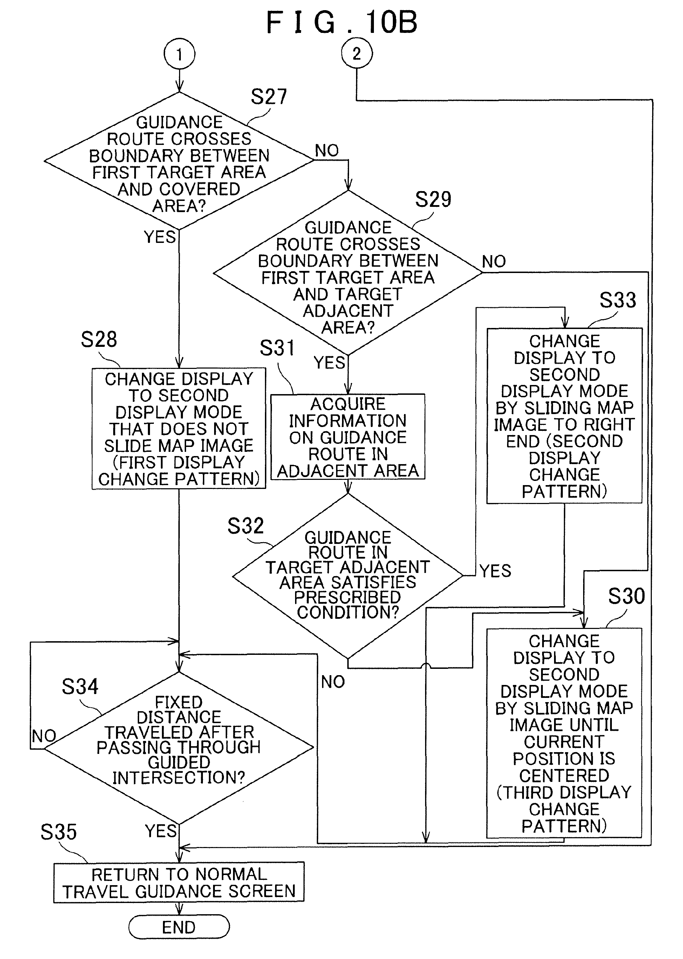

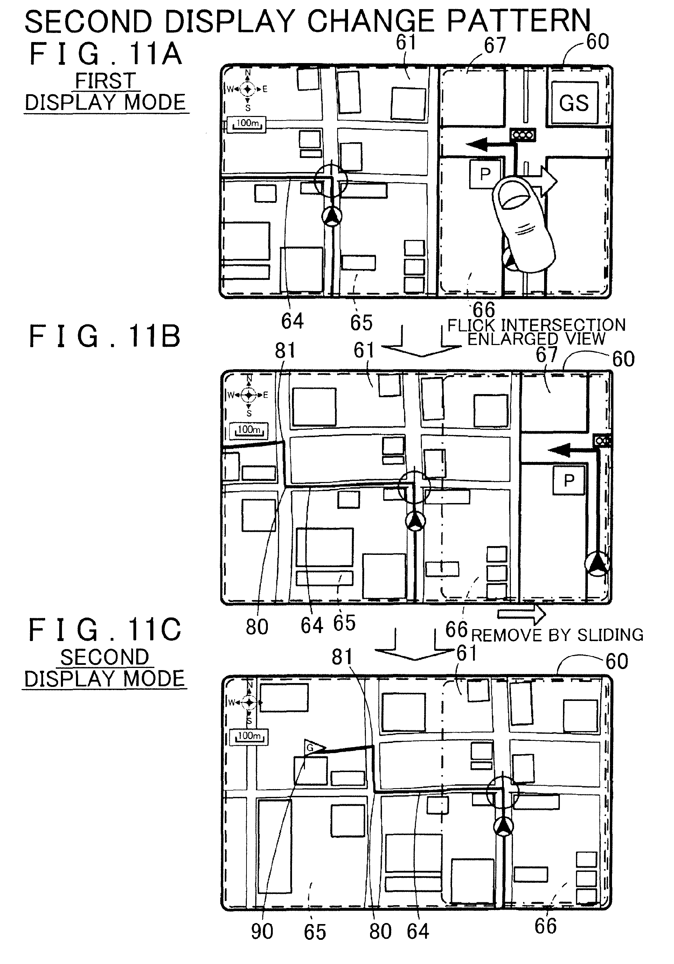

Next, a navigation device according to a second embodiment will be explained using FIGS. 10 and 11A to 11C. Note that in the following description, identical reference symbols to those used in the navigation device 1 according to the first embodiment of FIGS. 1 to 9 denote identical or corresponding parts to those of the navigation device 1 according to the first embodiment and so on.

The schematic configuration of the navigation device according to the second embodiment is substantially identical to that of the navigation device 1 according to the first embodiment. The various types of control processing are also substantially identical to those of the navigation device 1 according to the first embodiment.
However, the navigation device according to the second embodiment differs from the navigation device 1 according to the first embodiment in that, if the operation to remove the intersection enlarged view 67 is received while the travel guidance screen 60 based on the first display mode is displayed, the shape of the guidance route in the adjacent area next to the first target area 71 is also considered to change the display mode of the liquid crystal display 15.

The image display control processing program that is executed by the navigation ECU 13 in the navigation device according to the second embodiment will be explained below based on FIGS. 10A and 10B. FIGS. 10A and 10B are flowcharts of the image display control processing program according to the second embodiment. Here, the image display control processing program is executed after the vehicle power is turned on. The image display control processing program is a program that displays the travel guidance screen 60 that includes a map image on the liquid crystal display 15, and controls the display content of the travel guidance screen based on operation of the touch panel 14. Note that the program shown in the flowcharts of FIGS. 10A and 10B is stored in the RAM 52 or the ROM 53 that are provided in the navigation device and is executed by the CPU 51.

The processing at S21 to S26 is identical to that at S 1 to S6 of the image display control processing program according to the first embodiment (FIG. 6A), and will not be described here.

At S27, the CPU 51 acquires from the RAM 52 information on the guidance route set by the navigation device 1, and determines whether the guidance route crosses the boundary between the first target area 71 and the covered area 73 when the operation to remove the intersection enlarged view 67 is received (see FIG. 7).

If it is determined that the guidance route crosses the boundary 75 between the first target area 71 and the covered area 73 when the operation to remove the intersection enlarged view 67 is received (S27: Yes), the CPU 51 proceeds to S28. However, if it is determined that the guidance route does not cross the boundary 75 between the first target area 71 and the covered area 73 when the operation to remove the intersection enlarged view 67 is received (S27: No), the CPU 51 proceeds to S29.

At S28, according to the first display change pattern, the CPU 51 changes the display mode of the liquid crystal display 15 from the travel guidance screen 60 based on the first display mode to the travel guidance screen 60 based on the second display mode. The specific processing content is identical to that at S8 of the image display control processing program according to the first embodiment (FIG. 6B), and will not be described here. As a result of the processing performed at S28, the map image based on the map data of the covered area 73 where the guidance route 64 is positioned (the right area of the first target area 71) is preferentially displayed on the liquid crystal display 15 (see FIG. 4C). Thus, the user can see the shape of the guidance route in a range not displayed in the first display mode.

Meanwhile, at S29, the CPU 51 determines whether the guidance route crosses the boundary 76 between the first target area 71 and the target adjacent area 74 when the operation to remove the intersection enlarged view 67 is received (see FIG. 7). Note that the target adjacent area 74 is an area in particular positioned with respect to the first target area 71 on the side opposite the covered area 73 within the adjacent area 72 as described earlier.

If it is determined that the guidance route crosses the boundary between the first target area and the target adjacent area when the operation to remove the intersection enlarged view 67 is received (S29: Yes), the CPU 51 proceeds to S31. However, if it is determined that the guidance route does not cross the boundary between the first target area and the target adjacent area when the operation to remove the intersection enlarged view 67 is received (S29: No), the CPU 51 proceeds to S30.

At S30, according to the third display change pattern, the CPU 51 changes the display mode of the liquid crystal display 15 from the travel guidance screen 60 based on the first display mode to the travel guidance screen 60 based on the second display mode. The specific processing content is identical to that at S 11 of the image display control processing program according to the first embodiment (FIG. 6B), and will not be described here. As a result of the processing performed at S30, the map image around the current position of the vehicle is displayed on the liquid crystal display 15 without lateral bias (see FIG. 9C). Thus, the user can easily see the road shapes and facilities in a range not displayed in the first display mode.

Meanwhile, at S31, the CPU 51 acquires from the RAM 52 information on the guidance route in the adjacent area 72 next to the first target area 71 (see FIG. 7).

Next, at S32, based on the information on the guidance route in the adjacent area 72 acquired at S31, the CPU 51 determines whether the guidance route in the adjacent area 72 satisfies a prescribed condition. In this case, the prescribed condition is any one of the following (a) to (c):
(a) there is a guidance point on the guidance route in the adjacent area;
(b) there is at least a prescribed number of guidance points (e.g., two or more) on the guidance route in the adjacent area; or
(c) there is a guidance point within a prescribed distance (e.g., within 500 meters) from the outer edge of the first target area on the guidance route in the adjacent area.
   Note that the "guidance point" is a point at which guidance is provided for the guidance route in the navigation device, such as a guided intersection for which right or left turn guidance is provided, or a point at which lane change guidance is provided, for example.

If it is determined that the guidance route in the adjacent area 72 satisfies any one of (a) to (c) (S32: Yes), the CPU 51 proceeds to S33. However, if it is determined that the guidance route in the adjacent area 72 does not satisfy any one of (a) to (c) (S32: No), the CPU 51 proceeds to S30.

At S33, according to the second display change pattern, the CPU 51 changes the display mode of the liquid crystal display 15 from the travel guidance screen 60 based on the first display mode to the travel guidance screen 60 based on the second display mode. The specific processing content is identical to that at S 10 of the image display control processing program according to the first embodiment (FIG. 6B). That is, the CPU 51 sets the first target area 71 and the target adjacent area 74 (see FIG. 7) when the operation to remove the intersection enlarged view 67 is received as the second target area. Then, in response to the sliding movement of the intersection enlarged view 67, the CPU 51 slidingly moves the map image 61 in the direction of the intersection enlarged view 67, thus displaying in stages the map image based on the map data of the first target area 71 and the target adjacent area 74 in the map display area 65 including the specific area 66.

Here, FIGS. 11A to 11C are diagrams that show an example of changing the display mode of the liquid crystal display 15 based on the second display change pattern at S33. The example shown in FIGS. 11A to 11C illustrates a case where the condition (b) above is applied as the prescribed condition, and guided intersections 80, 81 that are guidance points are included in the target adjacent area 74 in particular as shown in FIG. 11C. As shown in FIGS. 11A to 11C, at S33, the intersection enlarged view 67 is slidingly moved rightward and removed in stages from the display area of the liquid crystal display 15. In response to the sliding movement of the intersection enlarged view 67, the map image 61 is slidingly moved in the direction of the intersection enlarged view 67 until the right end of the first target area 71 is positioned at the right end of the specific area 66, thus displaying in stages the map image based on the map data of the first target area 71 and the target adjacent area 74 in the map display area 65 including the specific area 66. Consequently, the map image of the covered area 74 where the guidance route 64 is positioned (the left area of the first target area 71) is preferentially displayed on the liquid crystal display 15. Thus, if the guidance route has a complex shape or there is guidance information beneficial to the user in a range not displayed in the first display mode, the user can see such information beforehand. For example, as shown in FIG. 11C, including the guided intersections 80, 81 in the target adjacent area 74 has the effect of enabling the user to see the guided intersections 80, 81 at an earlier timing.

In the navigation device according to the second embodiment, if it is determined that the guidance route in the adjacent area 72 satisfies any one of (a) to (c), a wider range of the target adjacent area 74 is set as the second target area compared to when it is determined that the guidance route in the adjacent area 72 does not meet any one of (a) to (c), and the sliding distance of the map image 61 increases. Thus, when the guidance route has a complex shape in a range not displayed in the first display mode, the map image based on the map data of the target adjacent area 74 including the guidance route 64 (the left area of the first target area 71) can be displayed with more priority on the liquid crystal display 15 compared to when the guidance route does not have a complex shape in a range not displayed in the first display mode (e.g., when the guidance route is relatively straight). Accordingly, the user can see the complex shape of the guidance route at an earlier timing.

Note that if it is determined that the guidance route in the adjacent area 72 satisfies any one of (a) to (c), the speed at which the map image slides may be slower than when it is determined that the guidance route in the adjacent area 72 does not satisfy any one of (a) to (c). Thus, the user can take more time to see the guidance route with the complex shape in greater detail.
In addition, if it is determined that the guidance route in the adjacent area 72 satisfies any one of (a) to (c), the speed at which the map image slides may be faster than when it is determined that the guidance route in the adjacent area 72 does not satisfy any one of (a) to (c). Thus, the user can see the guidance route with the complex shape at an earlier timing.

Next, at S34, the CPU 51 determines whether the vehicle has passed through the guided intersection determined at S23, and traveled at least a prescribed distance (e.g., 50 meters).

If it is determined that the vehicle has passed through the guided intersection determined at S23 and traveled at least the prescribed distance (S34: Yes), the CPU 51 returns the display content of the liquid crystal display 15 to the normal travel guidance screen 60 (FIG. 3A) (S35). The image display control processing program is then ended. However, if it is determined that the vehicle has not passed through the guided intersection determined at S23 or not traveled at least the prescribed distance after passing through the guided intersection (S34: No), the CPU 51 continues to display the travel guidance screen 60 based on the second display mode on the liquid crystal display 15.

As described in detail above, in the navigation device 1 according to the second embodiment, the map image display method performed by the navigation device 1, and the computer program executed by the navigation device 1, if the operation to remove the intersection enlarged view 67 is received while the travel guidance screen 60 based on the first display mode is displayed on the liquid crystal display 15, the second target area is set. The second target area is an area of the map data to be displayed based on the guidance route included in the adjacent area 72 next to the first target area 71. In response to the removal of the intersection enlarged view 67, the display mode of the map image on the liquid crystal display 15 is changed from the first display mode to the second display mode (S28, S30, S33), wherein the map data of the second target area is read from the map information database 31 and the map image displayed in the map display area 65 including the specific area 66. Therefore, the map data of an area helpful to the user can be preferentially provided.
Further, if the guidance route satisfying the prescribed condition is included in the adjacent area 72, the map data of the adjacent area 72 that includes the guidance route satisfying the prescribed condition can be preferentially displayed. Therefore, the user can easily see the shape of the guidance route satisfying the prescribed condition at an earlier timing, which increases user convenience.
This effect is particularly enhanced when the guidance route included in the adjacent area 72 is a guidance route with a complex shape.
Moreover, if the guidance route is included in the adjacent area 72, the sliding mode of the map image varies on the basis of the layout of the guidance points of the guidance route included in the adjacent area 72. Therefore, an appropriate map image based on the layout of the guidance points of the guidance route can be displayed. It is thus possible to provide the guidance points of the guidance route to the user in a suitable mode.

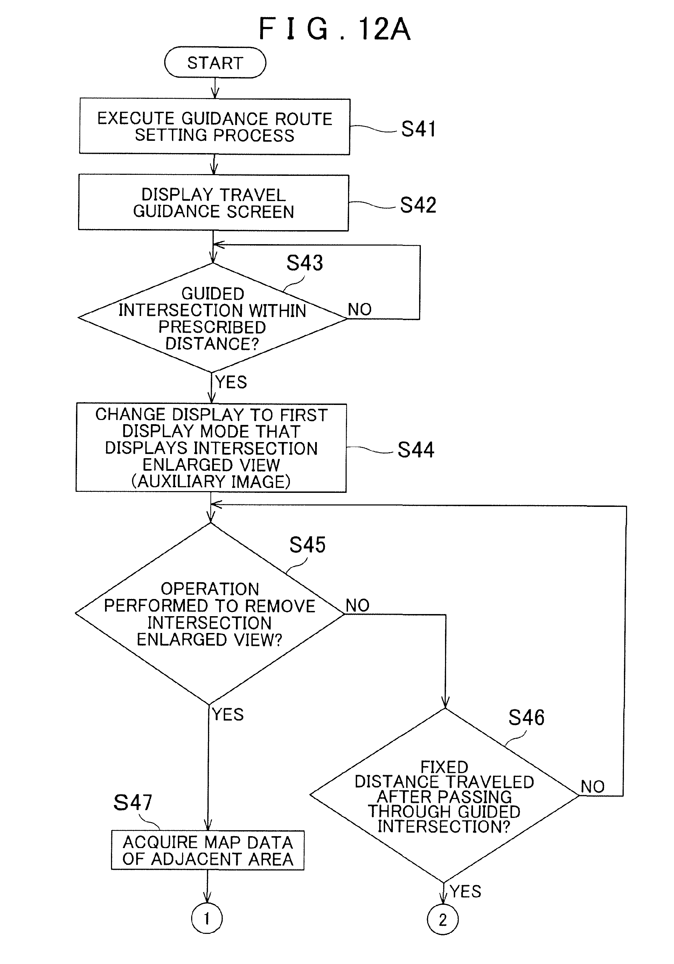

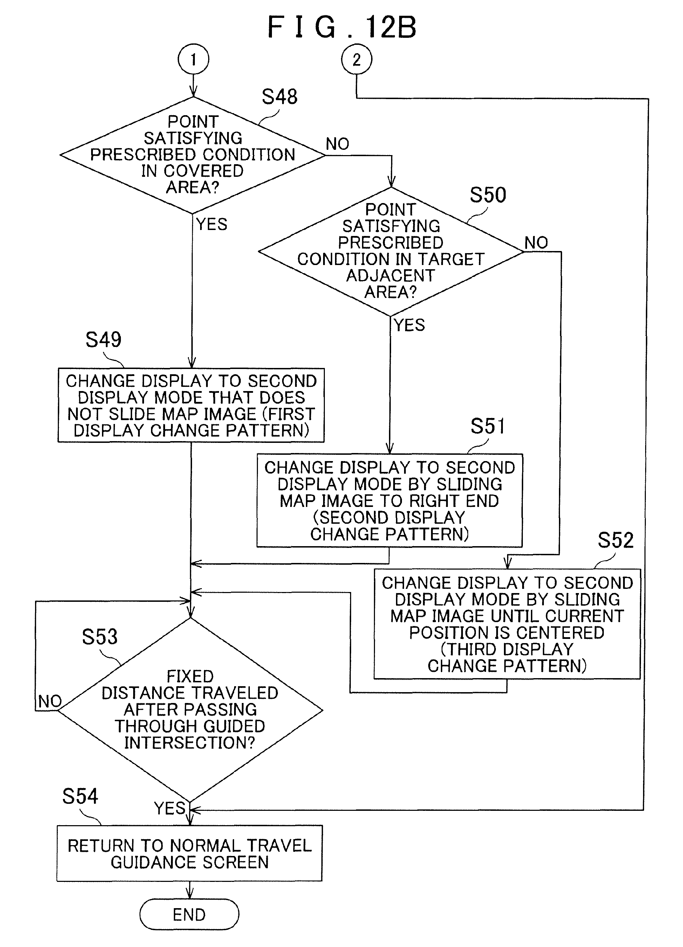

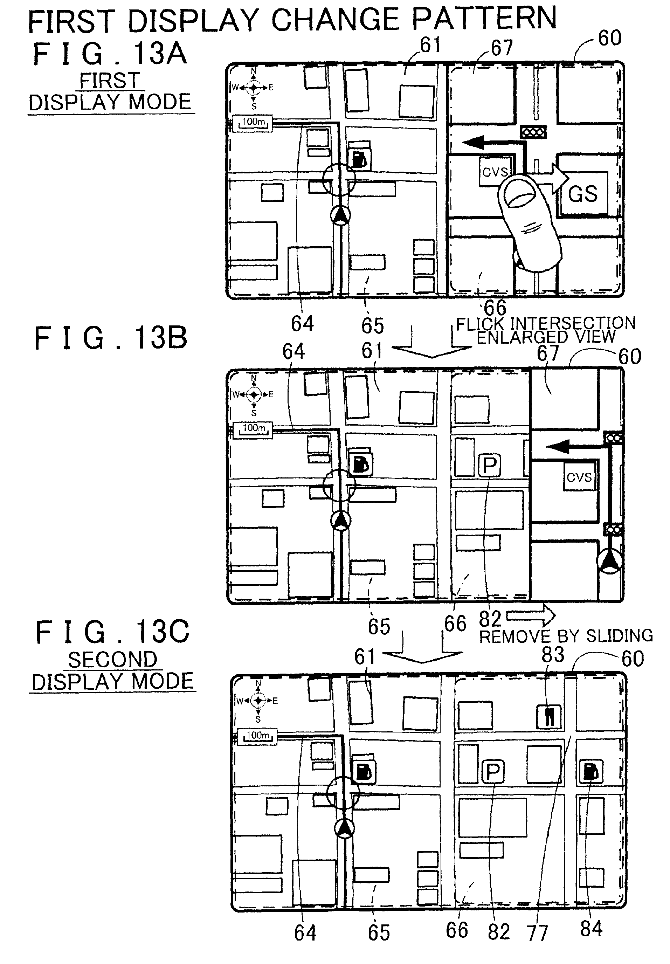

Next, a navigation device according to a third embodiment will be explained using FIGS. 12 and 13A to 13C. Note that in the following description, identical reference symbols to those used in the navigation device 1 according to the first embodiment of FIGS. 1 to 9 denote identical or corresponding parts to those of the navigation device 1 according to the first embodiment and so on.

The schematic configuration of the navigation device according to the third embodiment is substantially identical to that of the navigation device 1 according to the first embodiment. The various types of control processing are also substantially identical to those of the navigation device 1 according to the first embodiment.
However, the navigation device according to the third embodiment differs from the navigation device 1 according to the first embodiment in that, if the operation to remove the intersection enlarged view 67 is received while the travel guidance screen 60 based on the first display mode is displayed, points included in the adjacent area next to the first target area 71 are also considered to change the display mode of the liquid crystal display 15.

The image display control processing program that is executed by the navigation ECU 13 in the navigation device according to the third embodiment will be explained below based on FIGS. 12A and 12B. FIGS. 12A and 12B are flowcharts of the image display control processing program according to the third embodiment. Here, the image display control processing program is executed after the vehicle power is turned on. The image display control processing program is a program that displays the travel guidance screen 60 that includes a map image on the liquid crystal display 15, and controls the display content of the travel guidance screen based on operation of the touch panel 14. Note that the program shown in the flowcharts of FIGS. 12A and 12B is stored in the RAM 52 or the ROM 53 that are provided in the navigation device and is executed by the CPU 51.

The processing at S41 to S46 is identical to that at S 1 to S6 of the image display control processing program according to the first embodiment (FIG. 6A), and will not be described here.

At S47, the CPU 51 acquires from the map information database 31 the point data pertaining to points such as facilities positioned in the adjacent area 72 next to the first target area 71 (see FIG. 7).

Next, at S48, the CPU 51 determines whether a point satisfying a prescribed condition is included in the covered area 73 based on the point data acquired at S47. In this case, the point satisfying the prescribed condition is a point with information beneficial to the user. At S48, it is determined whether any one of the following conditions (A) to (D), for example, is satisfied:
(A) a destination or a waypoint set by the navigation device is included in the covered area 73;
(B) a saved point or a home location saved in the navigation device is included in the covered area 73;
(C) at least a prescribed number or points (e.g., three or more) is included in the covered area 73; or
(D) a point with a high display priority (e.g., a gas station, a parking lot, a convenience store, a post office, or a bank) is included in the covered area 73. Note that, a "high display priority" indicates a high priority for displaying a name or a mark that specifies a point in the map image displayed on the navigation device (e.g., prioritizing the display of a particular name or mark when there are marks or names overlapping the same location).

If it is determined that the covered area 73 includes a point satisfying any one of (A) to (D) (S48: Yes), the CPU 51 proceeds to S49. However, if it is determined that the covered area 73 does not include a point satisfying any one of (A) to (D) (S48: No), the CPU 51 proceeds to S50.

At S49, according to the first display change pattern, the CPU 51 changes the display mode of the liquid crystal display 15 from the travel guidance screen 60 based on the first display mode to the travel guidance screen 60 based on the second display mode. The specific processing content is identical to that at S8 of the image display control processing program according to the first embodiment (FIG. 6B). That is, the CPU 51 sets the first target area 71 and the covered area 73 (see FIG. 7) when the operation to remove the intersection enlarged view 67 is received as the second target area. Then, in response to the sliding movement of the intersection enlarged view 67, the CPU 51 reads the map data of the covered area 73 in the specific area 66 and displays the map image in stages. Thus, the display mode of the liquid crystal display 15 is changed from the first display mode to the second display mode.

Here, FIGS. 13A to 13C are diagrams that show an example of changing the display mode of the liquid crystal display 15 based on the first display change pattern at S49. The example shown in FIGS. 13A to 13C illustrates a case where the condition (C) above is applied as the prescribed condition, and three points (a parking lot, a restaurant, and a gas station) 82 to 84 are included in the covered area 73 in particular as shown in FIG. 13C. As shown in FIGS. 13A to 13C, at S49, the intersection enlarged view 67 is slidingly moved rightward and removed in stages from the display area of the liquid crystal display 15. In response to the sliding movement of the intersection enlarged view 67, the map image based on the map data of the covered area 73 is displayed in stages in the specific area 66 with the left map area fixed. Consequently, the map image based on the map data of the covered area 73 where the guidance route 64 is positioned (the right area of the first target area 71) is preferentially displayed on the liquid crystal display 15. Thus, the user can see points included in a range not displayed in the first display mode. This effect is particularly enhanced when such points are important points for guiding the user (a destination, waypoint, saved point, home location, and so on). For example, as shown in FIG. 13C, including the plurality of points 82 to 84 in the covered area 73 has the effect of enabling the user to see the plurality of points 82 to 84 at an earlier timing.

Meanwhile, at S50, the CPU 51 determines whether a point satisfying the prescribed condition is included in the target adjacent area 74 based on the point data acquired at S47. Note that the prescribed condition is identical to the condition at S48.

If it is determined that the target adjacent area 74 includes a point satisfying any one of (A) to (D) (S50: Yes), the CPU 51 proceeds to S51. However, if it is determined that the target adjacent area 74 does not include a point satisfying any one of (A) to (D) (S50: No), the CPU 51 proceeds to S52.

At S51, according to the second display change pattern, the CPU 51 changes the display mode of the liquid crystal display 15 from the travel guidance screen 60 based on the first display mode to the travel guidance screen 60 based on the second display mode. The specific processing content is identical to that at S 10 of the image display control processing program according to the first embodiment (FIG. 6B), and will not be described here. As a result of the processing performed at S51, the map image based on the map data of the target adjacent area 74 where a point satisfying the prescribed condition is positioned (the left area of the first target area 71) is preferentially displayed on the liquid crystal display 15 (see FIG. 8C). Thus, the user can see points included in a range not displayed in the first display mode. This effect is particularly enhanced when such points are important points for guiding the user (a destination, waypoint, saved point, home location, and so on). For example, as shown in FIG. 11C, including a destination 90 in the target adjacent area 74 and changing the display mode of the liquid crystal display 15 to the second display mode based on the second display change pattern has the effect of enabling the user to see the destination 90 at an earlier timing.

Meanwhile, at S52, according to the third display change pattern, the CPU 51 changes the display mode of the liquid crystal display 15 from the travel guidance screen 60 based on the first display mode to the travel guidance screen 60 based on the second display mode. The specific processing content is identical to that at S11 of the image display control processing program according to the first embodiment (FIG. 6B), and will not be described here. As a result of the processing performed at S52, the map image around the current position of the vehicle is displayed on the liquid crystal display 15 without lateral bias (see FIG. 9C). Thus, the user can easily see the road shapes and facilities in a range not displayed in the first display mode.

Next, at S53, the CPU 51 determines whether the vehicle has passed through the guided intersection determined at S43, and traveled at least a prescribed distance (e.g., 50 meters).

If it is determined that the vehicle has passed through the guided intersection determined at S43 and traveled at least the prescribed distance (S53: Yes), the CPU 51 returns the display content of the liquid crystal display 15 to the normal travel guidance screen 60 (FIG. 3A) (S54). The image display control processing program is then ended. However, if it is determined that the vehicle has not passed through the guided intersection determined at S43 or not traveled at least the prescribed distance after passing through the guided intersection (S53: No), the CPU 51 continues to display the travel guidance screen 60 based on the second display mode on the liquid crystal display 15.

As described in detail above, in the navigation device 1 according to the third embodiment, the map image display method performed by the navigation device 1, and the computer program executed by the navigation device 1, if the operation to remove the intersection enlarged view 67 is received while the travel guidance screen 60 based on the first display mode is displayed on the liquid crystal display 15, the second target area is set. The second target area is an area of the map data to be displayed based on the points included in the adjacent area 72 next to the first target area 71. In response to the removal of the intersection enlarged view 67, the display mode of the map image on the liquid crystal display 15 is changed from the first display mode to the second display mode (S49, S51, S52), wherein the map data of the second target area is read from the map information database 31 and the map image displayed in the map display area 65 including the specific area 66. Therefore, the map data of an area helpful to the user can be preferentially provided.
Further, if the points satisfying the prescribed condition are included in the adjacent area 72, the map data of the adjacent area 72 that includes the points satisfying the prescribed condition can be preferentially displayed. Therefore, the user can easily see the information of the points satisfying the prescribed condition at an earlier timing, which increases user convenience.
This effect is particularly enhanced when the points included in the adjacent area 72 are important points for guidance (a destination, waypoint, saved point, home location, and so on) for the user.

Note that the present invention is not limited to the embodiments described above, and may of course be subjected to various improvements and modifications within a scope that does not depart from the spirit of the present invention.
In the embodiments described above, as an example, the intersection enlarged view 67 is displayed as an auxiliary image on the liquid crystal display 15 when the vehicle approaches the guided intersection. However, the auxiliary image may be an image displayed on the basis of another condition. For example, the auxiliary image may be a menu screen displayed when a menu button is pressed, or a help screen displayed when a help button is pressed.

In the embodiments described above, the first and second embodiments set the second target area based on the guidance route included in the map data, and the third embodiment sets the second target area based on the points included in the map data. However, the second target area may be set based on both the guidance route and the points. For example, if the guidance route crosses the boundary between the first target area 71 and the covered area 73 and the point satisfying the prescribed condition is included in the covered area 73, processing to change to the second display mode may be performed based on S8.
Moreover, the second target area may be determined by comparing the guidance route and the points included in the covered area 73 and the target adjacent area 74. For example, if the covered area 73 includes a plurality of points and the target adjacent area 74 includes the guidance route, the second target area is preferably determined in consideration of the number and priority of the points, the shape of the guidance route, and the like.

In addition, although it is determined at S32 whether the guidance route satisfies any one of the conditions (a) to (c), it may be determined whether the guidance route satisfies a condition other than (a) to (c). For example, a condition of a guided intersection requiring more complicated guidance than normal in the adjacent area may be used. Note that a guided intersection requiring complicated guidance corresponds to a five-way intersection or the like, for example.

In the embodiments described above, the intersection enlarged view 67 is slidingly moved off the screen to remove the intersection enlarged view 67 from the liquid crystal display 15. However, the intersection enlarged view 67 may be removed by fading out the intersection enlarged view 67 instead of using such slide movement. The removal of the intersection enlarged view 67 may also be performed on the basis of a button operation instead of the flicking operation.

In addition to a navigation device, the present invention may be applied to any device that displays a map image. For example, the present invention may be applied to a portable terminal such as a cellular telephone, a personal computer, or a portable music player.

## Claims

1. A map image display device (1), comprising:
a map data storage medium (12) that stores map data;
a map image display unit (42) that reads the map data (32) from the map data storage medium, and displays a map image in a map display area of a display device (15);
the map image display device being **characterized by** further comprising :
a first display mode changing unit (43) that displays at a prescribed timing an auxiliary image (67) different from the map image in a specific area (66) that is part of the map display area (65), and changes a display mode of the map image on the display device to a first display mode in which the map data of a first target area (71) is read from the map data storage medium and a map image (61) of said first target area is displayed in the map display area excluding the specific area;
an operation receiving unit (44) that receives an operation from a user; and
a second display mode changing unit (45) that removes the auxiliary image displayed on the display device from the display device if a prescribed operation is received by the operation receiving unit, and in response to the removal, changes the display mode of the map image (61) on the display device (15) from the first display mode to a second display mode in which the map data of a second target area is read from the map data storage medium and a map image comprising said second target area is displayed in the map display area including the specific area, wherein
the second display mode changing unit reads, from the map data storage medium (12), the map data of an adjacent area (68, 69, 72) next to the first target area when the prescribed operation is received by the operation receiving unit, and sets the second target area so that it comprises the map data of the adjacent area (72).

2. The map image display device according to claim 1, wherein
the second display mode changing unit (45) sets the second target area based on information pertaining to one of a point and a guidance route to a destination within the adjacent area (72) when the prescribed operation is received by the operation receiving unit (44).

3. The map image display device according to claim 1 or 2, wherein
the second display mode changing unit (45) removes the auxiliary image (67) displayed on the display device (15) from the display device by slidingly moving the auxiliary image when the prescribed operation is received by the operation receiving unit (44), and in response to the sliding movement of the auxiliary image, changes in stages the display mode of the map image (61) on the display device from the first display mode to the second display mode.

4. The map image display device according to claim 3, wherein
the second display mode changing unit,
if the guidance route crosses a boundary between the first target area (71) and a covered area (73) corresponding to a position of the specific area when the prescribed operation is received by the operation receiving unit (44), sets the first target area (71) and the covered area when the prescribed operation is received by the operation receiving unit as the second target area, and
in response to the sliding movement of the auxiliary image, displays in stages the map image (61) based on the map data of the covered area in the specific area (66).

5. The map image display device according to claim 3, wherein
the second display mode changing unit,
if the guidance route does not cross the boundary between the first target area (71) and a covered area (73) corresponding to a position of the specific area, when the prescribed operation is received by the operation receiving unit (44), sets the first target area and the adjacent area (72) on a side opposite the covered area with respect to the first target area when the prescribed operation is received by the operation receiving unit as the second target area, and
in response to the sliding movement of the auxiliary image, displays the map image (61) based on the map data of the second target area in the map display area including the specific area by slidingly moving the map image in the direction of the auxiliary image.

6. The map image display device according to claim 5, wherein
the second display mode changing unit varies one of a distance and a speed with which the map image (61) is slidingly moved depending on whether the guidance route in the adjacent area satisfies a prescribed condition.

7. The map image display device according to claim 6, wherein
the prescribed condition is any one of a guidance point on the guidance route in the adjacent area, at least a prescribed number of guidance points on the guidance route in the adjacent area, and a guidance point within a prescribed distance from an outer edge of the first target area on the guidance route in the adjacent area.

8. The map image display device according to any one of claims 1 to 3,
wherein
the second display mode changing unit (45),
if the point satisfying the prescribed condition is included in the map data of the covered area corresponding to the position of the specific area (66) when the prescribed operation is received by the operation receiving unit (44), sets the first target area (71) and the covered area (73) when the prescribed operation is received by the operation receiving unit as the second target area, and
in response to the removal of the auxiliary image, displays the map image (61) based on the map data of the covered area in the specific area (66).

9. The map image display device according to any one of claims 1 to 8,
wherein
the map image display device (1) is installed in a vehicle, and
the auxiliary image (67) is an image that enlarges and shows an intersection positioned ahead in the traveling direction of the vehicle.

10. A map image display method, comprising the steps of:
reading map data from a map data storage medium (12) that stores the map data, and displaying a map image (61) in a map display area (65) of a display device (15);
(54, 524, 544) displaying at a prescribed timing an auxiliary image (67) different from the map image in a specific area (66) that is part of the map display area, and changing a display mode of the map image on the display device to a first display mode in which the map data of a first target area (71) is read from the map data storage medium and a map image of said first target area is displayed in the map display area excluding the specific area;
(55, 525, 545) receiving an operation from a user; and
removing the auxiliary image (67) displayed on the display device from the display device if a prescribed operation is received at the operation receiving step, and in response to the removal, changing the display mode of the map image on the display device from the first display mode to a second display mode in which the map data of a second target area is read from the map data storage medium and a map image comprising said second target area is displayed in the map display area including the specific area, wherein
at the second display mode changing step, the map data of an adjacent area next to the first target area when the prescribed operation is received at the operation receiving step is read from the map data storage medium, and the second target area is set so that it comprises the map data of the adjacent area.

11. A computer program that performs in a computer the functions of:
reading map data from a map data storage medium (12) that stores the map data, and displaying a map image (61) in a map display area (65) of a display device (15);
displaying at a prescribed timing an auxiliary image (67) different from the map image in a specific area (66) that is part of the map display area, and changing a display mode of the map image on the display device to a first display mode in which the map data of a first target area (71) is read from the map data storage medium and a map image of said first target area is displayed in the map display area excluding the specific area;
receiving an operation from a user; and
removing the auxiliary image (67) displayed on the display device from the display device if a prescribed operation is received by the operation receiving function, and in response to the removal, changing the display mode of the map image on the display device from the first display mode to a second display mode in which the map data of a second target area is read from the map data storage medium and a map image comprising said second target area is displayed in the map display area including the specific area, wherein
the second display mode changing function reads, from the map data storage medium, the map data of an adjacent area next to the first target area when the prescribed operation is received by the operation receiving function, and sets the second target area so that it comprises the map data of the adjacent area.

12. A computer program comprising instructions for implementing the method of claim 10, when it is run on a computer or computing device.
